# EUROPÄISCHE PATENTSCHRIFT

(11) **EP 0 793 093 B1**
(45) Veröffentlichungstag und Bekanntmachung des Hinweises auf die Patenterteilung: **07.07.2004**
(21) Anmeldenummer: 97250045.8
(22) Anmeldetag: 27.02.1997
(51) Int. Cl.: G01N 25/52, G01N 33/28, G01N 33/22

(54) **Verfahren und Vorrichtung zur automatisierten Flammpunktprüfung**
Method and apparatus for automatic flash point analysis
Méthode et appareil pour l'analyse automatique du point d'inflammation

(30) Priorität: 28.02.1996 DE 19609413
(43) Veröffentlichungstag der Anmeldung: 03.09.1997
(73) Patentinhaber: Petrotest Instruments GmbH & Co. KG, 15827 Dahlewitz (DE)
(72) Erfinder: Handschuck, Berhard, 12305 Berlin (DE); Eilers, Helmut, 10365 Berlin (DE)
(74) Vertreter: Hengelhaupt, Jürgen, Dipl.-Ing.

(56) Entgegenhaltungen:
- US-A- 2 823 824
- PATENT ABSTRACTS OF JAPAN vol. 10, no. 127 (P-455) [2184] , 13.Mai 1986 & JP 60 252249 A (IDEMITSU KOSAN K.K.), 12.Dezember 1985,

## Beschreibung

Die Erfindung betrifft ein Verfahren und eine Vorrichtung zur automatisierten Flammpunktprüfung im geschlossenen Tiegel und ist anwendbar zur Bestimmung des Flammpunktes von brennbaren Flüssigkeiten, Flüssigkeiten mit suspendierten Feststoffen, Schmierölen, Flüssigkeiten, die unter Versuchsbedingungen zur Ausbildung eines Oberflächenfilmes neigen, und anderen Flüssigkeiten.

Die Ermittlung des Flammpunktes einer Flüssigkeit ist ein wichtiges Kriterium, um die Feuer- bzw. Explosionsgefahr, die von diesem Stoff potentiell ausgeht, beurteilen zu können.
Der Flammpunkt ist die niedrigste Temperatur, korrigiert auf einem Barometerstand von 101,3 kPa, bei der unter Anwendung einer Zündflamme unter den vorgeschriebenen Versuchsbedingungen die Entflammung der Dämpfe der Probe erfolgt.
Um diese Flammpunktbestimmungen auch an verschiedenen Orten vergleichbar zu machen, wurden Flammpunkt-Prüfgeräte international genormt.

Dabei haben die Methoden nach Pensky Martens (z.B. gemäß DIN 51758, ASTM D93, ISO/EN 2719), Abel (z.B. gemäß IP 113, ISO 13736), Abel Pensky (z.B. gemäß DIN 51755/ 53213) und Tag (z.B. gemäß ASTM D56) mit geschlossenem Prüfeinsatz aufgrund der guten Reproduzierbarkeit bis heute weltweit die größte Verbreitung gefunden.
In diesen Normen sind alle wichtigen Gerätemaße, Aufheiz- und Meßbedingungen festgelegt. Ein wesentliches Geräteelement ist dabei der Prüfeinsatz, bestehend aus Tiegel und Verschlußdeckel mit einem Deckeldrehschieber zum Freigeben der Öffnungen des Prüfdeckels für eine in den Dampfraum eintauchende Zündung.

Gemäß dem bekannten Stand der Technik werden heute die Flammpunkte aufgrund der erforderlichen Rationalisierung überwiegend mit automatisierten Geräten bestimmt.
Nachteilig bei all den bekannten Verfahren ist, daß sich die Automatisierung nur auf den Aufheizvorgang, die Zündversuche und die Flammpunkterfassung, jedoch nur unzureichend auf die Vorbereitungsphase des Probenwechsels erstreckt.

Der Erfindung liegt daher die Aufgabe zugrunde, ein Verfahren und eine Vorrichtung zu schaffen, mit welchem ein vereinfachter und schnellerer Probenwechsel ermöglicht wird, manuelle Tätigkeiten und subjektive Einflüsse auf die Vorbereitung und Durchführung der Flammpunktprüfung weitgehend reduziert werden können und die Herstellung, der Betrieb und die Wartung der Vorrichtung einfach, zuverlässig und preiswert durchführbar ist.

Diese Aufgabe wird erfindungsgemäß gelöst durch die Merkmale im kennzeichnenden Teil der Ansprüche 1 und 8 in Verbindung mit den Merkmalen im jeweiligen Oberbegriff. Zweckmäßige Ausgestaltungen der Erfindung sind in den Unteransprüchen enthalten.

Ein wesentlicher Vorteil der Erfindung besteht darin, daß durch den Einsatz eines Simultan-Funktionskopfes die für den Probenwechsel bei ansonst automatisierten Geräten erforderlichen manuellen Tätigkeiten weitestgehend reduziert werden können und bedienerabhängige Einflüsse vermieden werden, indem die Prüfgefäße mit den Prüfflüssigkeiten vorab befüllt und mit den Mittel zur Temperaturerfassung und Flammpunktindikation sowie Mittel zur Prüfdeckeldrehung und Durchmischung aufweisenden Prüfdeckeln zu Prüfeinsätzen verschlossen werden, die so vorbereiteten Prüfeinsätze in die Temperiervorrichtung eingesetzt werden und lösbare Verbindungen und/oder Kontatkierungen zwischen einem Simultan-Funktionskopf eines Automaten und dem Prüfeinsatz hergestellt werden derart, daß die Mittel zur Temperaturerfassung und Flammpunktindikation elektrisch kontaktiert und gegebenenfalls die Mittel zur Durchmischung und Prüfdeckeldrehung mit Antrieben mechanisch verbunden werden und nach erfolgter Zündung und Abschluß der Flammpunktprüfung die Verbindungen und/oder Kontaktierungen wieder gelöst werden.

Dadurch, daß das Einsetzen des Temperatursensors sowie des Flammpunktindikators auf den Zeitpunkt nach dem Befüllen durch die Probe und vor dem Einbringen in die Heizvorrichtung vorverlagert wird, wird der spätere Zeitabschnitt des Probenwechsels im automatisierten Gerät nicht belastet.
Die bisher nach dem Stand der Technik notwendigen manuellen Handgriffe werden durch ein einmaliges Einschwenken des Simultan-Funktionskopfes ersetzt.
Da der mit der Prüfflüssigkeit beladene Prüfeinsatz weitestgehend dicht gegen unbeabsichtigtes Verdampfen der entzündungsfähigen Anteile der Prüfflüssigkeit ist, ergibt sich nun die völlig neue Möglichkeit, den so präparierten Prüfeinsatz auch für längere Zeit, gegebenenfalls vorgekühlt, stehen zu lassen.

Wenn dann dieser Prüfeinsatz in die Temperiervorrichtung eingesetzt wird, bleibt der geschlossene Zustand durchgängig bis zum ersten normmäßigen Zündtest erhalten.
Durch die manuelle oder auch automatische Bereitstellung mehrerer so vorbereiteter Proben ergeben sich weitere erhebliche Zeiteinsparungen.

Eine den nationalen und internationalen Normen entsprechende Vorrichtung, welche einfach und preiswert herstellbar und zuverlässig reproduzierbar zu betreiben ist, wird dadurch realisiert, daß die Gesamtprüfvorrichtung aus einem stationären Simultan-Funktionskopf und einem mobilen, völlig vom Simultan-Funktionskopf trennbaren, Prüfeinsatz besteht, wobei der Prüfeinsatz vorinstalliert mindestens einen Temperatursensor und mindestens einen Flammpunktindikator aufweist und an dem Simultan-Funktionskopf Kontaktierungselemente zur Herstellung der elektrischen Verbindung zu den Temperatursensoren und den Flammpunktindikatoren, und mindestens ein Koppelelement zur Herstellung der mechanischen Verbindung zwischen einem Rührerantrieb und dem Rührer angeordnet ist.

Die Erfindung soll nachstehend anhand von teilweise in den Figuren dargestellten Ausführungsbeispielen näher erläutert werden.
Es zeigen:
- Fig. 1: eine schematische Darstellung der Gesamtvorrichtung mit vom Prüfeinsatz getrennten Simultan-Funktionskopf (Probenbeschickungsphase),
- Fig. 2: eine schematische Darstellung von miteinander verbundenem Prüfeinsatz und Simultan-Funktionskopf (Flammpunktprüfungsphase).

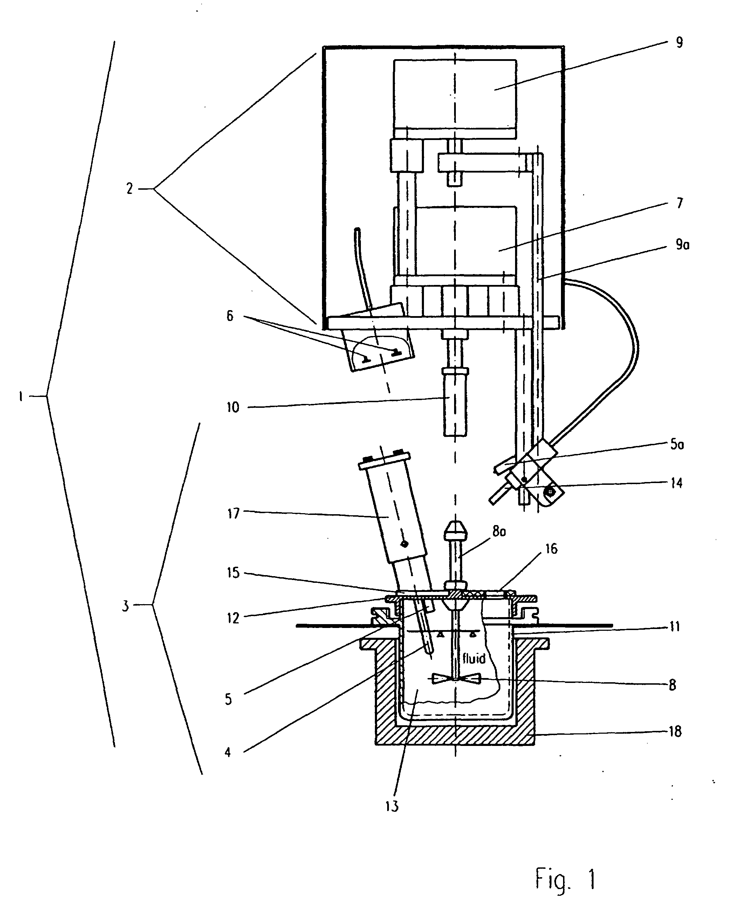

Wie aus Figur 1 zu ersehen ist, besteht die Gesamtprüfvorrichtung 1 aus einem stationären Simultan-Funktionskopf 2, welcher mit einer in den Figuren nicht dargestellten Steuer- und Auswerteeinheit verbunden ist, sowie einem in der Probenbeschickungsphase von dem Simultan-Funktionskopf 2 völlig getrennten mobilen Prüfeinsatz 3.

Der mobile Prüfeinsatz 3 besteht aus einem Prüfgefäß 11, in welchem sich die Prüfflüssigkeit 13 befindet und welches durch einen Prüfdeckel 12 verschlossen ist. In die Prüfflüssigkeit 13 taucht ein Rührer 8 ein.
Der Prüfdeckel 12 ist im vorliegenden Ausführungsbeispiel mit einem Drehschieber 15 ausgerüstet, welcher zur Öffnung bzw. zum Verschluß der Zündöffnung 16 dient. Weiterhin ist an dem Prüfdeckel 12 eine Hülse 17 angeordnet, welche der Aufnahme mindestens eines Temperatursensors 4 und mindestens eines Flammpunktindikators 5 dient. An der Hülse 17 sind die elektrischen Kontakte vom Temperatursensor 4 und vom Flammpunktindikator 5 angeordnet.
Der Temperatursensor 4 erstreckt sich durch den Boden der Hülse 17 bis in die Prüfflüssigkeit 13, der Flammpunktindikator 5 bis in den Raum oberhalb der Prüfflüssigkeit 13.
Selbstverständlich ist es auch möglich, den Temperatursensor 4 und den Flammpunktindikator 5 direkt ohne eine Hülse 17 anzuordnen und mit geeigneten Kontakten zu versehen.
Durch den Prüfdeckel 12 hindurch ist die Antriebswelle 8a für den Rührer 8 geführt. Der Prüfeinsatz 3 ist in eine Temperiervorrichtung 18 eingesetzt, wo eine Erwärmung oder für bestimmte Anwendungsfälle auch eine Kühlung realisiert wird.

Der Simultan-Funktionskopf 2 weist im vorliegenden Ausführungsbeispiel Kontaktierungselemente 6 auf, welche zum Zusammenwirken mit den Kontakten des Temperatursensors 4 und des Flammpunktindikators 5 ausgebildet sind. Der Simultan-Funktionskopf 2 enthält weiterhin einen Rührantrieb 7, welcher mit einem Koppelelement 10 zur mechanischen Ankopplung an die Antriebswelle 8a des Rührers 8 versehen ist. Ein Drehschieberantrieb 9 mit einem Betätigungselement 9a ist zur Betätigung des Drehschiebers 15 angeordnet.

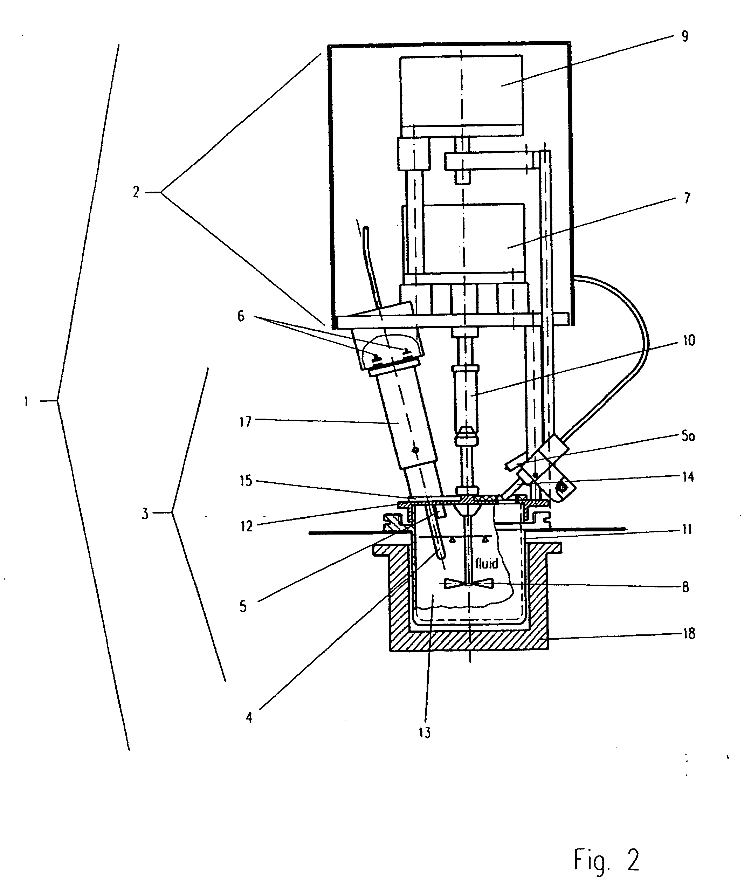

Die Zündvorrichtung 14 ist im vorliegenden Ausführungsbeispiel ebenfalls am Simultan-Funktionskopf 2 angeordnet derart, daß sie bei Verbindung des Simultan-Funktionskopfes 2 mit dem Prüfeinsatz 3 in die Zündöffnung 16 eintaucht, wie in Figur 2 zu ersehen ist. Zusätzlich ist im vorliegenden Ausführungsbeispiel oberhalb der Zündöffnung 16 ein Zusatzflammpunktindikator 5a angordnet, welcher eine zusätzliche Indikation oberhalb der eintauchenden Zündflamme und damit außerhalb des gesamten Prüfeinsatzes 3 ermöglicht.
Die Realisierung kann ebenfalls durch thermische Indikation oder aber auch z.B. durch automatische Entflammungs-Beobachtung an dieser Stelle erfolgen. Dieser Entzündungsfall außerhalb des Prüfeinsatzes 3 entsteht z.B. durch einen starken Dampfdruck im Prüfeinsatz 3 oder durch einen zu späten Zündbeginn (Flüssigkeit siedet u.U. schon). Hierbei ist nicht gewährleistet, daß die Entflammung des entzündeten Dampfgemisches in den Prüfeinsatz 3 hineinschlägt und damit für die herkömmliche Indikation über den Flammpunktindikator 5 bemerkbar wird.
In einem weiteren, in den Figuren nicht dargestelltem Ausführungsbeispiel ist auch die Zündung 14 am Prüfeinsatz 3 angeordnet und weist Verbindungselemente zum Anschluß an den Simultan-Funktionskopf 2 oder direkt an die Versorgungsmedien, zum Beispiel Gas und/oder Elektroenergie, auf.
Bei dieser Ausführungsvariante können Drehschieber 15, Drehschieberantrieb 9 und Betätigungselement 9a gegebenenfalls entfallen.

Die Funktionsweise der Gesamtprüfvorrichtung soll nachfolgend noch im zeitlichen Ablauf beschrieben werden.
Nach dem Befüllen des Prüfgefäßes 11 mit der Prüfflüssigkeit 13 wird der Prüfeinsatz 3 durch den Prüfdeckel 12 mit Drehschieber 15 und der Hülse 12 mit dem Temperatursensor 4 und dem Flammpunktindikator 5 normgemäß verschlossen.
Die Anordnung wird in die Temperiervorrichtung 18 gestellt. Der Simultan-Funktionskopf 2 wird nun manuell oder auch automatisch angetrieben aufgesetzt. Hiermit werden automatisch alle erforderlichen Verbindungen und Positionierungen vorgenommen. Dies sind im einzelnen die elektrische Kontaktierung zur Meßwertübernahme der Probentemperatur und die elektrische Kontaktierung zur Meßwertübernahme der Flammpunktindikation. Weiterhin wird die zwischenzeitlich vom Prüfdeckel entfernte Zündung in die erforderliche Ausgangsposition gesetzt (alternativ kann die Zündung am Prüfdeckel verbleiben, wobei dann beim Prüfeinsatzwechsel die Versorgungsanschlüsse lösbar sein müssen) und der Kraftschluß vom Rührerantrieb 7 zum Rührer 8 wird hergestellt sowie die Positionierung des Betätigungselementes 9a des Drehschieberantriebes 9 zum Öffnen/Schließen des Drehschiebers 15 vorgenommen.

Die Erfindung ist nicht beschränkt auf die hier dargestellten Ausführungsbeispiele. Vielmehr ist es möglich, durch geeignete Kombination der auch gezeigten Mittel und Merkmale weiterer Ausführungsvarianten zu realisieren, ohne den durch die Ansprüche definierten Rahmen der Erfindung zu verlassen.

### Bezugszeichenliste

- 1: Gesamtprüfvorrichtung
- 2: Simultan-Funktionskopf
- 3: Prüfeinsatz
- 4: Temperatursensor
- 5: Flammpunktindikator
- 5a: Zusatzflammpunktindikator
- 6: Kontaktierunselemente
- 7: Rührerantrieb
- 8: Rührer
- 8a: Antriebswelle
- 9: Drehschieberantrieb
- 9a: Betätigungselement
- 10: Koppelelement
- 11: Prüfgefäß
- 12: Prüfdeckel
- 13: Prüfflüssigkeit
- 14: Zündung
- 15: Drehschieber
- 16: Zündöffnung
- 17: Hülse
- 18: Temperiervorrichtung

## Patentansprüche

1. Verfahren zur automatisierten Flammpunktprüfung, wobei Prüfflüssigkeiten in mit Prüfdeckel verschließbaren Prüfgefäßen temperiert und Zündversuchen unterworfen werden und bei erfolgreicher Zündung eine Flammpunkterfassung erfolgt,
**dadurch gekennzeichnet, daß**
- die Prüfgefäße mit den Prüfflüssigkeiten vorab befüllt und mit den Mittel zur Temperaturerfassung und Flammpunktindikation sowie Mittel zur Prüfdeckeldrehung und Durchmischung der Prüfflüssigkeiten aufweisenden Prüfdeckeln zu Prüfeinsätzen verschlossen werden,
- die so vorbereiteten Prüfeinsätze in die Temperiervorrichtung eingesetzt werden und
- lösbare Verbindungen und/oder Kontaktierungen zwischen einem Simultan-Funktionskopf eines Automaten und dem Prüfeinsatz hergestellt werden derart, daß
- die Mittel zur Temperaturerfassung und Flammpunktindikation elektrisch kontaktiert werden und nach erfolgter Zündung mittels einer Zündvorrichtung und Abschluß der Flammpunktprüfung die Verbindungen und/oder Kontaktierungen wieder gelöst werden.

2. Verfahren nach Anspruch 1,
**dadurch gekennzeichnet, daß**
die Mittel zur Temperaturerfassung und zur Flammpunktindikation über elektrische Kontakte mit dem Simultan-Funktionskopf und der Signalauswertung nur für die Zeit des Verbleibens des Prüfeinsatzes in der Temperiervorrichtung verbunden sind.

3. Verfahren nach Anspruch 1,
**dadurch gekennzeichnet, daß**
die Zündvorrichtung zum Probenwechsel durch einen gesteuerten Antrieb vom Prüfdeckel entfernt wird.

4. Verfahren nach Anspruch 1,
**dadurch gekennzeichnet, daß**
die elektrische Kontaktierung, die lösbare Verbindung, die Positionierung der Zündvorrichtung und die Prüfdeckeldrehung durch Absenken und/oder Einschwenken des Simultan-Funktionskopfes erfolgt.

5. Verfahren nach Anspruch 1,
**dadurch gekennzeichnet, daß**
zusätzlich zur Flammpunktindikation innerhalb des Prüfeinsatzes eine weitere Flammpunktindikation außerhalb des Prüfeinsatzes durchgeführt wird.

6. Verfahren nach Anspruch 5,
**dadurch gekennzeichnet, daß**
die weitere Flammpunktindikation oberhalb einer Zündöffnung erfolgt.

7. Verfahren nach Anspruch 1,
**dadurch gekennzeichnet, daß**
die Mittel zur Durchmischung und Prüfdeckeldrehung mit Antrieben mechanisch verbunden werden.

8. Vorrichtung zur automatisierten Flammpunktprüfung, bestehend aus einem eine Gesamtprüfvorrichtung (1) bildenden, die Prüfflüssigkeit (13) enthaltenden, mit Prüfdeckel (12) verschließbarem Prüfgefäß (11) mit Rührer (8), Temperatursensor (4) und Flammpunktindikator (5), einer Temperiervorrichtung (18) und einer Zündung (14),
**dadurch gekennzeichnet, daß**
die Gesamtprüfvorrichtung (1) aus einem stationären Simultan-Funktionskopf (2) und einem mobilen Prüfeinsatz (3) besteht, wobei der Prüfeinsatz (3) das Prüfgefäß (11) und den Prüfdeckel (12) umfasst und vorinstalliert den Temperatursensor (4) und den Flammpunktindikator (5) aufweist und am Simultan-Funktionskopf (2) Kontaktierungselemente (6) zur Herstellung von lösbaren elektrischen Verbindungen zu dem Temperatursensor (4) und dem Flammpunktindikator (5) und mindestens ein Koppelelement (10) zur Herstellung einer lösbaren mechanischen Verbindung zwischen einem im Simultan-Funktionskopf (2) enthaltenen Rührerantrieb (7) und dem Rührer (8) angeordnet sind.

9. Vorrichtung nach Anspruch 8,
**dadurch gekennzeichnet, daß**
am Simultan-Funktionskopf (2) ein Drehschieberantrieb (9) mit Betätigungselement (9a) angeordnet ist.

10. Vorrichtung nach Anspruch 8,
**dadurch gekennzeichnet, daß**
am Prüfeinsatz (3) zusätzlich die Zündung (14) angeordnet ist und Verbindungselemente zum Anschluß an den Simultan-Funktionskopf (2) aufweist.

11. Vorrichtung nach Anspruch 8,
**dadurch gekennzeichnet, daß**
der Temperatursensor (4) und der Flammpunktindikator (5) in einer Hülse (17) angeordnet sind.

12. Vorrichtung nach Anspruch 8,
**dadurch gekennzeichnet, daß**
außerhalb des Prüfeinsatzes (3) oberhalb der Zündöffnung (16) ein Zusatzflammpunktindikator (5a) angeordnet ist.

## Claims

1. A method for the automated testing of the flash point, for which test liquids are thermostated in test vessels, which can be closed off with a test lid, and subjected to ignition attempts, the flash point being determined in the event that the ignition is successful, **characterized in that**
- the test vessels are filled with the test liquids to begin with and closed off with test lids, having means for determining the temperature and indicating the flash point as well as means for rotating the test lids and for mixing thoroughly to form test inserts,
- the test inserts, so prepared, are inserted into the thermostating equipment and
- the detachable connections and/or contacting between a simultaneous function head of automatic equipment and the test insert is produced in such a manner, that
• the means for determining the temperature and for indicating the flash point are electrically contacted and, after ignition is accomplished by means of an ignition device and the flash point testing is concluded, the connections and/or contacts are undone once again.

2. The method of claim 1, **characterized in that** the means for determining the temperature and for indicating the flash point are connected over electrical contacts with the simultaneous function head and the signal evaluation only for the time that the test insert remains in the thermostating equipment.

3. The method of claim 1, **characterized in that**, for changing samples, the ignition device is removed from the test lid by a controlled driving mechanism.

4. The method of claim 1, **characterized in that** the electrical contacting, the detachable connection, the positioning of the ignition device and the rotation of the test lid are accomplished by lowering and/or swinging in the simultaneous function head.

5. The method of claim 1, **characterized in that**, in addition to being indicated within the test insert, the flash point is furthermore indicated outside of the test insert.

6. The method of claim 5, **characterized in that** the additional indicating of the flash point occurs above an ignition opening.

7. The method of claim 1, **characterized in that** the means for mixing and for rotating the test lid are connected mechanically with driving mechanisms.

8. An apparatus for the automated testing of the flash point, consisting of a test vessel (11), which forms an entire test equipment (1), contains the test liquid (13), can be closed off with a test lid (12) and is provided with a stirrer (8), temperature sensor (4) and flash point indicator (5), thermostating equipment (18) and an ignition device (14), **characterized in that** the entire test equipment (1) consists of a stationary simultaneous function head (2) and a mobile test insert (3), the test insert (3) containing the test vessel (11) and the test lid (12) and pre-installed, having the temperature sensor (4) and the flash point indicator (5), and contacting elements (6) for producing detachable electrical connections to the temperature sensor (4) and to the flash point indicator (5) and at least one coupling element (10) for producing a detachable mechanical connection between a stirrer driving mechanism (7), which is contained in the simultaneous function head (2), and the stirrer (8) being disposed at the simultaneous function head (2).

9. The apparatus of claim 8, **characterized in that** a rotary slide valve driving mechanism (9) with a manipulating element (9a) is disposed at the simultaneous function head (2).

10. The apparatus of claim 8, **characterized in that**, additionally, the ignition device (14) is disposed at the test insert (3) and has connecting elements for the connection to the simultaneous function head (2).

11. The apparatus of claim 8, **characterized in that** the temperature sensor (4) and the flash point indicator (5) are disposed in a sleeve (17).

12. The apparatus of claim 8, **characterized in that** an additional flash point indicator (5a) is disposed outside of the test insert (3) above the ignition opening (16).

## Revendications

1. Procédé de contrôle automatique du point d'ignition, des fluides de contrôle étant tempérés dans des réservoirs de contrôle obturables par couvercles de contrôle et soumis à des essais d'allumage, le point d'ignition étant détecté à l'allumage,
**caractérisé en ce que**
- les réservoirs de contrôle sont préalablement remplis avec les fluides de contrôle et fermés au moyen des couvercles de contrôle présentant des éléments de saisie de température et d'indication du point d'ignition ainsi que des éléments de rotation du couvercle de contrôle et de mélange des fluides de contrôle, pour former des cartouches de contrôle,
- les cartouches de contrôle ainsi formées sont mises en place dans le dispositif tempéreur,
- des connexions et/ou des contacts desserrables sont formés entre une tête de fonctionnement simultané d'un automate et la cartouche de contrôle de manière à
• réaliser un contact électrique avec les éléments de saisie de température et d'indication du point d'ignition, les connexions et/ou contacts desserrables étant à nouveau desserrés après allumage par un dispositif d'allumage et à l'issue du contrôle du point d'ignition.

2. Procédé selon la revendication 1,
**caractérisé en ce que**
les éléments de saisie de température et d'indication du point d'ignition ne sont reliés par des contacts électriques à la tête de fonctionnement simultané et à l'évaluation de signal que pendant le temps de présence de la cartouche de contrôle dans le dispositif tempéreur.

3. Procédé selon la revendication 1,
**caractérisé en ce que**
pour le renouvellement d'essai, le dispositif d'allumage est retiré par le couvercle de contrôle au moyen d'un entraînement commandé.

4. Procédé selon la revendication 1,
**caractérisé en ce que**
le contact électrique, la connexion desserrable, le positionnement du dispositif d'allumage et la rotation du couvercle de contrôle ont lieu par abaissement et/ou engagement par pivotement de la tête de fonctionnement simultané.

5. Procédé selon la revendication 1,
**caractérisé en ce qu'**
en plus de l'indication du point d'ignition à l'intérieur de la cartouche de contrôle, une autre indication de point d'ignition a lieu à l'extérieur de la cartouche de contrôle.

6. Procédé selon la revendication 5,
**caractérisé en ce que**
l'autre indication de point d'ignition a lieu au-dessus d'une ouverture d'allumage.

7. Procédé selon la revendication 1,
**caractérisé en ce que**
les éléments de mélange et de rotation du couvercle de contrôle sont mécaniquement reliés à des entraînements.

8. Procédé de contrôle automatique du point d'ignition, consistant en un réservoir de contrôle (11) obturable par un couvercle de contrôle (12), formant un dispositif général de contrôle (1) et contenant le fluide de contrôle (13), avec agitateur (8), capteur de température (4) et indicateur de point d'ignition (5), un dispositif tempéreur (18) et un allumage (14),
**caractérisé en ce que**
le dispositif général de contrôle (1) consiste en une tête fixe de fonctionnement simultané (2) et une cartouche de contrôle (3) mobile, ladite cartouche de contrôle (3) comprenant le réservoir de contrôle (11) et le couvercle de contrôle (12) et présentant le capteur de température (4) et l'indicateur de point d'ignition (5) pré-montés, et des éléments de contact (6) pour la formation de connexions électriques desserrables avec le capteur de température (4) et l'indicateur de point d'ignition (5) étant disposés sur la tête de fonctionnement simultané (2), ainsi qu'au moins un élément coupleur (10) pour la réalisation d'une connexion mécanique desserrable entre un entraînement d'agitateur (7) contenu dans la tête de fonctionnement simultané (2) et l'agitateur (8).

9. Dispositif selon la revendication 8,
**caractérisé en ce qu'**
un entraînement à tiroir rotatif (9) avec un élément de manoeuvre (9a) est disposé sur la tête de fonctionnement simultané (2).

10. Dispositif selon la revendication 8,
**caractérisé en ce que**
l'allumage (14) est additionnellement disposé sur la cartouche de contrôle (3) et présente des éléments de connexion pour le raccordement à la tête de fonctionnement simultané (2).

11. Dispositif selon la revendication 8,
**caractérisé en ce que**
le capteur de température (4) et l'indicateur de point d'ignition (5) sont disposés dans une douille (17).

12. Dispositif selon la revendication 8,
**caractérisé en ce qu'**
un indicateur de point d'ignition additionnel (5a) est disposé à l'extérieur de la cartouche de contrôle (3), au-dessus de l'ouverture d'allumage (16).
